# EUROPÄISCHE PATENTSCHRIFT

(11) **EP 2 908 079 B1**
(45) Veröffentlichungstag und Bekanntmachung des Hinweises auf die Patenterteilung: **04.08.2021**
(21) Anmeldenummer: 14155001.2
(22) Anmeldetag: 13.02.2014
(51) Int. Cl.: F28B 3/04, F28B 9/08, F28D 21/00, B29C 35/04

(54) **Verfahren zur Rückgewinnung von Wärmeenergie bei der Vulkanisation eines Fahrzeugreifens**
Method for the recovery of heat energy during the vulcanisation of a vehicle tyre
Procédé de récupération d'énergie thermique lors de la vulcanisation d'un pneu de véhicule

(43) Veröffentlichungstag der Anmeldung: 19.08.2015
(73) Patentinhaber: Continental Reifen Deutschland GmbH, 30165 Hannover (DE)
(72) Erfinder: Lutz, Christian, 57412 Schmittviller (FR)
(74) Vertreter: Continental Corporation

(56) Entgegenhaltungen:
- EP-A1- 2 309 218
- EP-A1- 2 447 030
- DE-A1- 2 349 283
- US-A1- 2012 301 565

## Beschreibung

Die Erfindung betrifft ein Verfahren zur Rückgewinnung von Wärmeenergie bei der Vulkanisation eines Fahrzeugreifens mit den Schritten:
a) Durchführen einer Reifenvulkanisation mit einer Vulkanisationspresse und in Verbindung mit einem Heißwasserdampf,
b) Abführen des Heißwasserdampfes (16) aus der Vulkanisationspresse über einen Heißwasserdampf-Kollektor.

Die Reifenvulkanisation erfolgt in Heizpressen, bei der der Reifenrohling in geeignete Formsegmente eingesetzt und unter Einwirkung von Wärme sowie Druck vulkanisiert wird. Auf der Reifeninnenseite wird ein flexibler Balg an den Reifen angelegt, der mit einem Heizmedium beaufschlagt wird und auf diese Weise dem Reifenrohling von der Innenseite die notwendige Vulkanisationsenergie zuführt.

Als Heizmedium wird in der Regel ein Heißwasserdampf eingesetzt, welches über ein Rohrleitungssystem dem Innenbalg zu- und wieder abgeführt wird. Nach der Reifenvulkanisation wird der Heißwasserdampf über ein Abluftrohr nach draußen abgeführt.

Ein Verfahren der eingangs genannten Art ist beispielsweise aus der US 2012/0301565 A1, die den Oberbegriff des Anspruchs 1 offenbart, bekannt. Das Verfahren bedient sich eines für einen Fahrzeugluftreifen vorgesehenen Vulkanisationssystems mit einer Vielzahl von in Gruppen angeordneten Vulkanisationspressen. Jeder Gruppe ist ein Dampfkessel zugeordnet, wobei vom Dampfkessel zu den Vulkanisationspressen führende Rohre vorgesehen sind. Aus dem Dampfkessel stammender Dampf wird über einen Kompressor verdichtet und über einen Erhitzer zusätzlich erwärmt. Mittels eines Sensors werden Druck und Temperatur gemessen, wobei die entsprechenden Informationen zu einem Kontroller weitergeleitet werden, welcher den Dampfkessel, den Erhitzer sowie den Kompressor und damit Temperatur und Druck regelt. Der zu den Vulkanisationspressen geleitete Dampf kondensiert und das gebildete heiße Kondensat wird zu einem Rückflussrohr weitergeleitet, welches vorzugsweise zum Dampfkessel zurückführt, sodass das heiße Kondensat wieder verdampft und anschließend erneut zur Vulkanisation genutzt wird. Alternativ kann das Rückflussrohr auch direkt an eine dem Dampfkessel nachgeschaltete Rohrleitung angeschlossen sein.

Der Erfindung liegt die Aufgabe zu Grunde, ein Verfahren zu schaffen, bei dem die im Heißwasserdampf enthaltene Wärmeenergie auf einfache Weise und mit einer hohen Effektivität zurückgewonnen werden kann.

Gelöst wird die Aufgabe durch ein Verfahren mit folgenden Schritten:
c) Zuführen des Heißwasserdampfes in einen Dampfkondensator, welcher mehrstufig mit übereinanderliegenden Wasserberieselungsvorrichtungen ausgebildet ist,
   wobei der Heißwasserdampf im Gegenstrom zu einem Kühlmedium in Form von Wasser geführt und abgekühlt wird,
   wobei das Wasser erwärmt und in einem Sammelbehälter aufgefangen wird,
d) Abführen des aufgewärmten Wassers aus dem Sammelbehälter und Zuführen des aufgewärmten Wassers zu einem Wärmetauscher,
   wobei am Wärmeaustauscher Wärmeenergie entnommen und einem Verbraucher zugeführt wird,
e) Abführen des abgekühlten Wassers aus dem Wärmetauscher,
f) Rückführen des abgekühlten Wassers zum Dampfkondensator,
   wobei das Wasser im Wesentlichen im Kreislauf geführt wird.

Ein Vorteil der Erfindung besteht darin, dass mit dem Verfahren die im Heißwasserdampf enthaltene Wärmenergie auf einfache Weise und mit einer hohen Effektivität zurückgewonnen werden kann. Auf diese Weise kann insbesondere die Öko-Bilanz von Reifenfabriken wesentlich verbessert werden. Außerdem wird durch das Verfahren der Prozess für die Reifenvulkanisation in keinster Weise beeinträchtigt, wobei gleichzeitig ein Großteil der eingesetzten Wärmemenge mit einem hohen Wirkungsgrad zurückgewonnen werden kann.

In einer weiteren vorteilhaften Weiterbildung der Erfindung ist vorgesehen, dass der Dampfkondensator im Wesentlichen drucklos und im Wesentlichen bei Umgebungsdruck betrieben wird.

Auf diese Weise wird die Zykluszeit beim Prozess zur Reifenvulkanisation nicht beeinträchtigt.

In einer weiteren vorteilhaften Weiterbildung der Erfindung ist vorgesehen, dass bei Schritt f) der Verbraucher eine Raumheizung oder eine Heizung für eine Produkterwärmung ist. Auf diese Weise lassen sich die Fixkosten des Reifenwerkes reduzieren. Außerdem lässt sich der Wärmetauscher auf einfache Weise mit einer Raumheizung verbinden.

In einer weiteren vorteilhaften Weiterbildung der Erfindung ist vorgesehen, dass das aufgewärmte Wasser bei Schritt d) über die Schwerkraft in den Sammelbehälter geführt wird.

Dadurch wird keine Energie benötigt, um das aufgewärmte Wasser in den Sammelbehälter zu bringen.

Anhand eines Ausführungsbeispiels soll die Erfindung näher erläutert werden. Es zeigt:

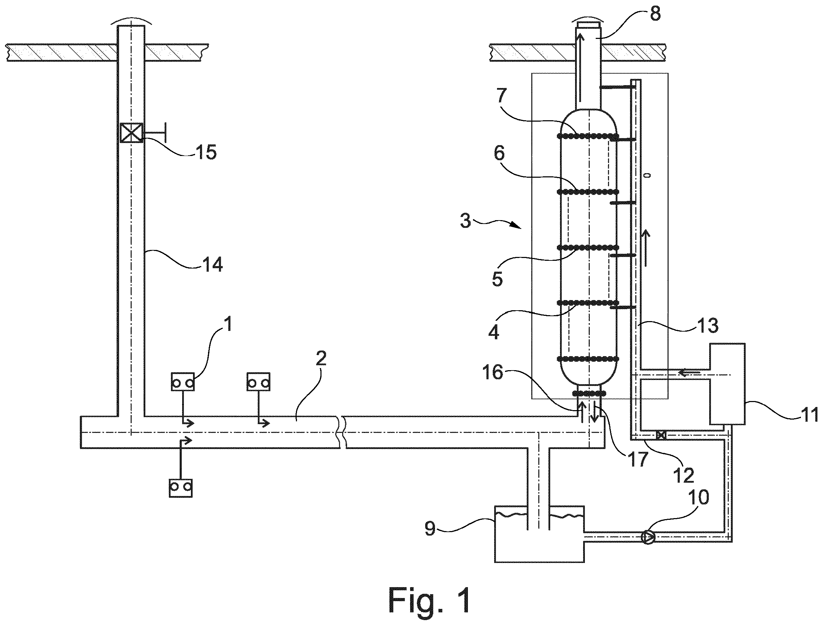

- Fig. 1: eine Vorrichtung für die Durchführung des Verfahrens.

Fig. 1 zeigt eine Prinzipskizze von dem Verfahren. An einen zentralen Heißwasserdampf-Kollektor 2 sind mehrere Vulkanisationspressen 1 angeschlossen. Nach der Vulkanisation eines Fahrzeugreifens wird der Heißwasserdampf dem Heißwasserdampf-Kollektor 2 zugeführt. Der Heißwasserdampf-Kollektor 2 ist in der dargestellten Weise an den Dampfkondensator 3 angeschlossen. Der Heißwasserdampf 16 steigt im Dampfkondensator 3 nach oben. Im Dampfkondensator sind übereinanderliegende Ebenen 4, 5, 6 und 7 mit jeweils übereinander liegenden Berieselungsvorrichtungen angeordnet. Über die Berieselungsvorrichtungen wird dem Dampfkondensator abgekühltes Wasser zugeführt. Das abgekühlte Wasser wird in Form von Tröpfchen über die Berieselungsvorrichtungen zugegeben. Der Heißwasserdampf 16 steigt im Dampfkondensator 3 nach oben, wobei das abgekühlte Wasser in Form von Tröpfchen im Gegenstrom geführt wird. Bei diesem Vorgang werden die Wassertröpfchen abgekühlt und der Heißwasserdampf im Wesentlichen in eine flüssige Phase zurückgeführt. Das aufgewärmte Wasser 17 wird über den Schwerkrafteinfluss in den Sammelbehälter 9 geführt. Das Wasser im Sammelbehälter kann eine Wassertemperatur von bis zu 100° C aufweisen. Über die Pumpe 10 wird das aufgewärmte Wasser dem Wärmetauscher 11 zugeführt. Der Wärmetauscher 11 ist mit einem Verbraucher verbunden, bei dem es sich beispielsweise um eine Raumheizung handeln kann. Über die Zuleitung 13 wird das im Wärmetausch abgekühlte Wasser zum Dampfkondensator geführt. Von der Zuleitung 13 gehen einzelne Leitungen zu den Ebenen 4, 5, 6 und 7 ab, die jeweils eine Berieselungsvorrichtung aufweisen. Das abgekühlte Wasser wird über die Berieselungsvorrichtungen im Kreislauf wieder dem Dampfkondensator 3 zugeführt. Auf der Oberseite des Dampfkondensators 3 befindet sich ein Abluftrohr 8. Außerdem ist ein zweites Abluftrohr 14 vorgesehen, welches dann zum Einsatz kommt, wenn beispielsweise der Dampfkondensator instand gesetzt wird.

### Bezugszeichenliste

(ist Teil der Beschreibung)
- 1: Vulkanisationspresse
- 2: Heißwasserdampf-Kollektor
- 3: Dampfkondensator
- 4: Erste Ebene mit Berieselungsvorrichtung für abgekühltes Wasser
- 5: Zweite Ebene mit Berieselungsvorrichtung für abgekühltes Wasser
- 6: Dritte Ebene mit Berieselungsvorrichtung für abgekühltes Wasser
- 7: Vierte Ebene mit Berieselungsvorrichtung für abgekühltes Wasser
- 8: Abluftrohr
- 9: Sammelbehälter für aufgewärmtes Wasser
- 10: Pumpe
- 11: Wärmetauscher
- 12: Bypass-Leitung
- 13: Zuleitung zum Dampfkondensator
- 14: Zweites Abluftrohr
- 15: Klappensystem
- 16: Aufsteigender Heißwasserdampf
- 17: Aufgewärmtes Wasser

## Patentansprüche

1. Verfahren zur Rückgewinnung von Wärmeenergie bei der Vulkanisation eines Fahrzeugreifens mit den Schritten:
a) Durchführen einer Reifenvulkanisation mit einer Vulkanisationspresse (1) und in Verbindung mit einem Heißwasserdampf (16) und
b) Abführen des Heißwasserdampfes (16) aus der Vulkanisationspresse (1) über einen Heißwasserdampf-Kollektor (2), **gekennzeichnet durch** durch folgende Schritte,
c) Zuführen des Heißwasserdampfes (16) in einen Dampfkondensator (3), welcher mehrstufig mit übereinanderliegenden Wasserberieselungsvorrichtungen (4, 5, 6, 7) ausgebildet ist,
wobei der Heißwasserdampf (16) im Gegenstrom zu einem Kühlmedium in Form von Wasser geführt und abgekühlt wird,
wobei das Wasser erwärmt und in einem Sammelbehälter (9) aufgefangen wird,
d) Abführen des aufgewärmten Wassers aus dem Sammelbehälter (9) und Zuführen des aufgewärmten Wassers zu einem Wärmetauscher (11),
wobei am Wärmeaustauscher (11) Wärmeenergie entnommen und einem Verbraucher zugeführt wird,
e) Abführen des abgekühlten Wassers aus dem Wärmetauscher (11),
f) Rückführen des abgekühlten Wassers zum Dampfkondensator (13),
wobei das Wasser im Wesentlichen im Kreislauf geführt wird.

2. Verfahren nach Anspruch 1,
**dadurch gekennzeichnet, dass**
der Dampfkondensator (3) im Wesentlichen drucklos und im Wesentlichen bei Umgebungsdruck betrieben wird.

3. Verfahren nach einem der vorhergehenden Ansprüche,
**dadurch gekennzeichnet, dass**
bei Schritt f) der Verbraucher eine Raumheizung oder eine Heizung für eine Produkterwärmung ist.

4. Verfahren nach einem der vorhergehenden Ansprüche,
**dadurch gekennzeichnet, dass**
das aufgewärmte Wasser bei Schritt d) über einen Schwerkrafteinfluss in den Sammelbehälter (9) geführt wird.

## Claims

1. Method for the recovery of heat energy during the vulcanization of a vehicle tyre, comprising the steps of:
a) carrying out vulcanization of a tyre with a vulcanization press (1) and in conjunction with hot-water steam (16) and
b) removing the hot-water steam (16) from the vulcanization press (1) by way of a hot-water steam collector (2),
**characterized by** the following steps:
c) feeding the hot-water steam (16) into the steam condenser (3), which is formed in multiple stages with water sprinkling devices (4, 5, 6, 7) lying one above the other,
wherein the hot-water steam (16) is conducted counter to a cooling medium in the form of water and is cooled down, wherein the water is heated and caught in a collecting container (9),
d) removing the heated-up water from the collecting container (9) and feeding the heated-up water to a heat exchanger (11),
wherein heat energy is removed at the heat exchanger (11) and fed to a consumer,
e) removing the cooled-down water from the heat exchanger (11),
f) returning the cooled-down water to the steam condenser (13), wherein the water is conducted essentially in a circulating manner.

2. Method according to Claim 1,
**characterized in that**
the steam condenser (3) is operated essentially in a pressureless manner and essentially at ambient pressure.

3. Method according to one of the preceding claims, **characterized in that**
in step f), the consumer is a space heater or a heater for heating a product.

4. Method according to one of the preceding claims, **characterized in that**
in step d), the heated-up water is conducted into the collecting container (9) under the influence of a gravitational force.

## Revendications

1. Procédé de récupération d'énergie thermique lors de la vulcanisation d'un pneumatique de véhicule, ledit procédé comprenant les étapes suivantes :
a) effectuer une vulcanisation du pneumatique avec une presse de vulcanisation (1) et en liaison avec une vapeur d'eau chaude (16) et
b) évacuer la vapeur d'eau chaude (16) de la presse de vulcanisation (1) par le biais d'un collecteur de vapeur d'eau chaude (2),
**caractérisé par** les étapes suivantes
c) introduire la vapeur d'eau chaude (16) dans un condenseur de vapeur (3) qui est conçu sur plusieurs étages avec des dispositifs de ruissellement d'eau (4, 5, 6, 7) superposés,
la vapeur d'eau chaude (16) étant amenée et refroidie sous forme d'eau à contre-courant d'un milieu de refroidissement,
l'eau étant chauffée et collectée dans un récipient collecteur (9),
d) évacuer l'eau chauffée du récipient collecteur (9) et amener l'eau chauffée à un échangeur de chaleur (11),
l'énergie thermique étant prélevée sur l'échangeur de chaleur (11) et amenée à un consommateur,
e) évacuer l'eau refroidie de l'échangeur de chaleur (11),
f) ramener l'eau refroidie au condenseur de vapeur (13), l'eau étant sensiblement mise en circulation.

2. Procédé selon la revendication 1,
**caractérisé en ce que**
le condenseur de vapeur (3) est utilisé sensiblement sans pression et sensiblement à pression ambiante.

3. Procédé selon l'une des revendications précédentes,
**caractérisé en ce que**
à l'étape f) le consommateur est un moyen de chauffage de pièce ou un moyen de chauffage de produits.

4. Procédé selon l'une des revendications précédentes,
**caractérisé en ce que**
l'eau chauffée à l'étape d) est guidée jusque dans le récipient collecteur (9) par gravité.
